Europäisches Patentamt

(19) European Patent Office

Office européen des brevets

(11) Publication number: **0 154 615**
**B1**

(12) **EUROPEAN PATENT SPECIFICATION**

(45) Date of publication of patent specification: **04.05.88**

(21) Application number: **85850074.7**

(22) Date of filing: **06.03.85**

(51) Int. Cl.⁴: **A 01 G 23/08**

(54) A method and a device at felling and processing of trees.

(30) Priority: **07.03.84 SE 8401269**

(43) Date of publication of application:
**11.09.85 Bulletin 85/37**

(45) Publication of the grant of the patent:
**04.05.88 Bulletin 88/18**

(84) Designated Contracting States:
**AT BE CH DE FR GB IT LI NL**

(56) References cited:
**US-A-3 531 235**
**US-A-3 556 183**
**US-A-3 630 398**

(73) Proprietor: **MOTRAC GUNNARSON &
LARSSON HB**
**Signebyn PL 1262**
**S-660 10 Dals Länged (SE)**

(72) Inventor: **Gunnarson, Wiking**
**Signebyn, PL 1262**
**S-660 10 Dals Langed (SE)**

(74) Representative: **Onn, Thorsten et al**
**AB STOCKHOLMS PATENTBYRA Box 3129**
**S-103 62 Stockholm (SE)**

Courier Press, Leamington Spa, England.

EP 0 154 615 B1

## Description

This invention relates to a device and a method for felling and processing of trees in multi-process machines having a processing unit, in accordance with the preamble of claim 1.

Normally the tree is tilted or felled after separation from root with the aid of a felling means and is let down immediately for further processing.

It is desired directly after cutting the tree, without however the felling means releasing the tree, to be able to feed the tree by a simple means into the processing unit for its disintegration to chips or its limbing and cutting into lengths.

There are solutions for this problem. US patent 3 556 183 discloses a device, in which the tree is held fast by the felling means after separation from root and is moved into the processing unit by the crane boom, which in this case is arranged in the machine which supports the crane boom and the felling means. By means of a relatively complicated mechanism, which requires a great ground clearance because of its construction, the felled tree can be moved to substantially horizontal position and be introduced between the feed rolls of the supported processing unit by the crane boom.

In accordance with the invention as set out in the characterizing portions of the claims a device is provided with simple means which makes it possible to feed the tree trunk directly between the feed rolls of the processing unit. The very feeding or introduction of the trunk between the feed rolls is achieved merely by turning of the felling means, whereby the potential energy of the tree can be utilized at the same time. The tree trunk will then be pressed in between said rolls when the grapple means provided with saw or tongue is loosened from the trunk.

The invention will be described in greater detail in the form of an example with reference to the drawing, wherein Fig. 1 shows schematically a part of a crane boom with felling means, the tree trunk just being cut, Fig. 2 shows the corresponding parts in a second position and Fig. 3 shows the corresponding parts in a third position.

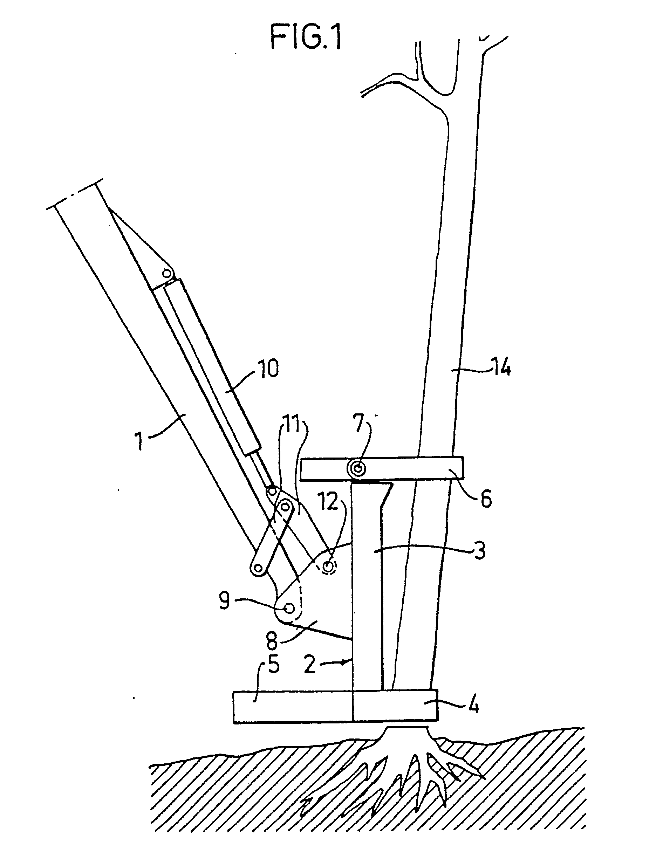

In the figures 1 denotes a crane boom and 2 a felling means. It is to be understood that the crane boom is supported by some usual machine intended for cutting operation and not described here more in detail, because it is no part of the invention. The processing unit, that is the unit for disintegration to chips or limbing and cutting in lengths, can be supported by this machine or be standing by itself.

The felling means 2 consists of a main girder 3 and a lower grapple means 4 arranged at one end of this, said lower grapple means comprising a saw or tongue with drive means 5. This grapple means 4 with the saw or tongue and its drive as well as mounting to the main girder is well-known and therefore these parts are not described in detail here.

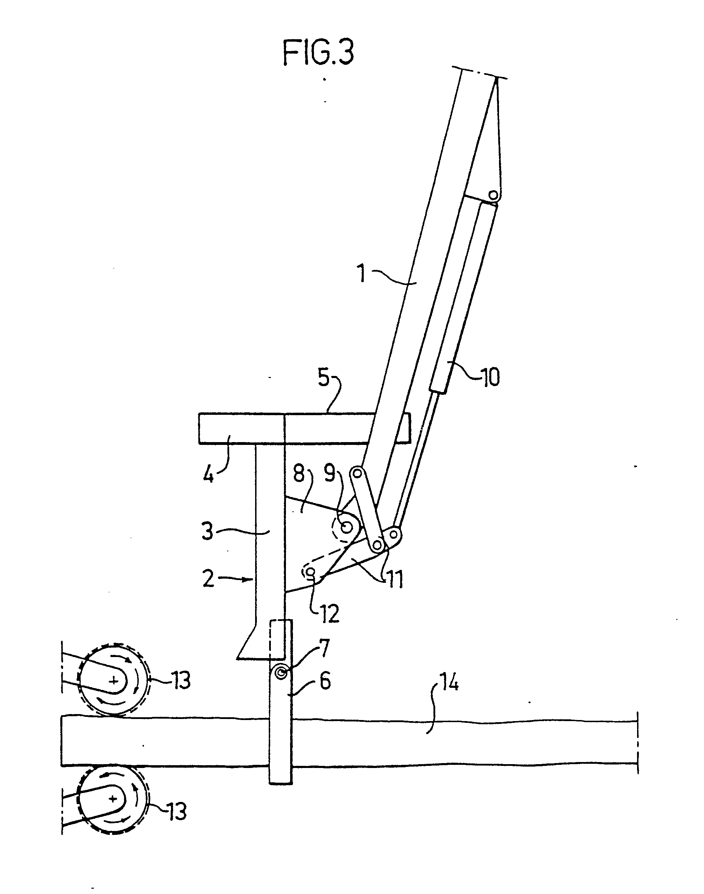

An upper grapple means 6 is arranged pivotally by means of a pivot joint 7 at the opposite end of the main girder 3 in such a way that it can be swiveled out from a substantially perpendicular orientation relative to the main girder to an orientation parallel to but extending away from the main girder (see Fig. 3). In addition, the upper grapple means 6 is designed in known manner to be able to grapple the trunk of the tree to be felled.

A bracket 8 is arranged on the girder 3 between the grapple means 4 and 6. The felling means 2 is supported by the crane boom 1 by means of a first joint 9 in the bracket. A hydraulic cylinder 10 is articulatedly connected at 12 via slewing brackets 11 to the bracket 8 spaced from the joint 9. The felling means can consequently be swung about the joint 9 by means of the hydraulic cylinder 10.

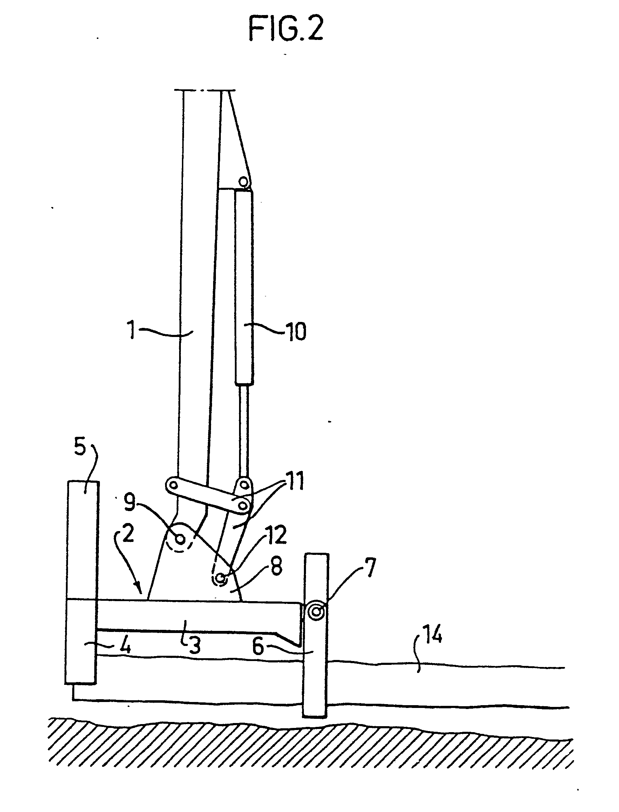

In order to understand the invention better this will be described in the course of a working cycle. In Fig. 1 it is shown how the trunk 12 is grappled by the grapple means 4 and 6 and cut by the lower grapple means 4 of the saw or tongue. The tree has just been lifted somewhat by means of the crane boom. Fig. 2 shows how the trunk 12 has been tilted or felled by means of the felling means 2 to a substantially horizontal position. The trunk is still held fast by the grapple means 4 and 6. In view of the fact how machines of this type work it is apparent that the felling means 2 has now been turned according to the figures in clockwise direction to an orientation substantially perpendicular to the crane boom 1.

The lower grapple means 4 is now opened and the felling means 2 is swung further in clockwise direction to a position 180° from the starting position when the tree was cut. This turning of the felling means 2 is carried out by means of the hydraulic cylinder 10. The turning relative to the trunk 12 is made possible in that the upper grapple means 6 is connected by means of the joint 7 to the main girder 3.

At this turning of the felling means the upper grapple means 6 will describe a bow-shaped movement downwards and to the left in the figure, i.e. at the same time as the trunk 12 is lowered relative to the crane boom 1 or the joint 9 the trunk will be displaced in a direction with the root end first. This movement is used to be able to press the trunk directly between the feed rolls, here designated 13, of the processing unit for the further processing of the tree (disintegration, limbing, cutting to lengths, etc.).

The turning of the felling means 2 through 180° is made possible by means of the slewing brackets 11, which is clearly apparent from Figs. 1—3. Thus, the invention gives the possibility, using a simple pivotal movement of a constructively uncomplicated felling means, of automatically pressing the trunk of the felled tree between the feed rolls of the processing unit.

## Claims

1. A device for felling of trees, the device comprising a felling means (2) which includes a main girder (3) pivotally arranged on the crane boom of a felling machine and lower and upper grapple means (4, 6) arranged on the ends of the main girder, the lower grapple means (4) being locatable close to the roots of a tree and comprising a saw or tongue for cutting the trunk of the tree, the lower grapple means (4) being rigidly connected to one end of the main girder (3) in an orientation substantially perpendicular to the main girder (3) and the upper grapple means being pivotally mounted on the other end of the main girder (3) via a first pivot joint (7) so as to be pivotable from an orientation perpendicular to the main girder to an orientation parallel to the main girder, the main girder (3) being connected by means of a second pivot joint (9) to the crane boom (1) with a hydraulic means (10) connecting the felling means (2) with the crane boom (1) for pivoting the felling means (2) relative to the crane boom (1), the device being characterized in that the upper grapple means (6) may be pivoted to an orientation parallel to the main girder but away from the end thereof, the second pivot joint (9) connecting the girder (3) with the crane boom (1) is located between the upper and lower grapple means (4, 6) and the hydraulic means (10) can pivot the felling means (2) relative to the crane boom (1) about an angle of at least 180°.

2. The device of claim 1 wherein the second pivot joint (9) is located substantially equidistant from the upper and lower grapple means (4, 6) and spaced from the main girder.

3. A method of felling trees using the device of claims 1 or 2 and feeding the trees into a multi-process machine having a processing unit, the method comprising grappling a tree trunk with the upper and lower grapple means whilst the main girder (3) is maintained parallel to the tree trunk, cutting the tree trunk with the saw or tongue of the lower grapple means, lifting the tree trunk whilst in an upright position, felling the tree trunk to a substantially horizontal position by pivoting the felling means (2), opening the lower grapple means (4), further pivoting the felling means (4) relative to the crane bottom (1) whilst simultaneously pivoting in the opposite direction the upper grapple means (6) relative to the main girder so as to move the tree trunk horizontally with its root end first into the processing unit, and opening the upper grapple means (6) to release the trunk.

**Patentansprüche**

1. Vorrichtung zum Fällen von Bäumen, die ein Fällorgan (2) umfasst, das mit einem am Kranarm einer Einschlagmaschine schwenkbar angeordneten Hauptträger (3) sowie mit an den Enden des Hauptträgers angeordneten, unteren und oberen Greiforganen (4, 6) versehen ist, wobei das untere Greiforgan (4) nahe an den Wurzeln eines Baums placiert werden kann und eine Säge oder Zunge umfasst, womit der Baumstamm gekappt werden kann, das untere Greiforgan (4) mit einem Ende des Hauptträgers (3) in einer zum Hauptträger (3) wesentlich winkelrechten Lage fest verbunden ist und das obere Greiforgan am anderen Ende des Hauptträgers (3) via ein erstes Zapfengelenk (7) schwenkbar montiert ist, um von einer zum Hauptträger winkelrechten Lage in eine zum Hauptträger parallele Lage geschwenkt werden zu können, der Hauptträger (3) mittels eines zweiten Zapfengelenks (9) mit dem Kranarm (1) mit einem hydraulischen Mittel (10) verbunden ist, das das Fällorgan (2) mit dem Kranarm (1) verbindet, um das Fällorgan (2) in Beziehung zum Kranarm (1) zu schwenken, dadurch gekennzeichnet, dass das obere Greiforgan (6) in eine zum Hauptträger parallele Lage aber entfernt von dessen Ende geschwenkt werden kann, das zweite Zapfengelenk (9), das den Träger (3) mit dem Kranarm (1) verbindet, zwischen dem oberen und dem unteren Greiforgan (4, 6) placiert ist und das hydraulische Mittel (10) das Fällorgan (2) in Beziehung zum Kranarm (1) unter einem approximativen Winkel von zumindest 180° schwenken kann.

2. Vorrichtung nach Anspruch 1, worin das zweite Zapfengelenk (9) wesentlich in gleicher Entfernung von dem oberen und dem unteren Greiforgan (4, 6) und entfernt vom Hauptträger vorgesehen ist.

3. Verfahren zum Fällen von Bäumen mit der Vorrichtung nach den Ansprüchen 1 oder 2 und Einführung der Bäume in eine Mehrprozessmaschine mit einer Prozesseinheit, wobei im Verfahren ein Baumstamm mit dem oberen und dem unteren Greiforgan ergriffen wird, während der Hauptträger (3) parallel zum Baumstamm gehalten wird, der Baumstamm mit der Säge oder Zunge des unteren Greiforgans gekappt wird, der Baumstamm in einer aufrechten Lage gehoben wird, der Baumstamm zu einer wesentlich horizontalen Lage mittels Schwenkens des Fällorgans (2) gefällt wird, das untere Greiforgan (4) geoffnet wird, das Fällorgan (4) in Beziehung zum Kranarm (1) weiter geschwenkt wird, während gleichzeitig das obere Greiforgan (6) in Beziehung zum Hauptträger in der entgegengesetzten Richtung geschwenkt wird, um den Baumstamm mit dessen Wurzelende zuerst in die Prozesseinheit zu führen, und das obere Greiforgan (6) geöffnet wird, um den Stamm freizugeben.

**Revendications**

1. Dispositif d'abattage d'arbres, comprenant un moyen d'abattage (2) comportant une poutre principale (3) disposée pivotante sur le bras de grue d'une machine d'abattage et des organes de préhension inférieur et supérieur (4, 6) disposés aux extrémités de la poutre principale, l'organe de préhension inférieur (4) pouvant être appliqué près des racines d'un arbre et comprenant une scie ou une cisaille servant à couper le tronc de l'arbre, ledit organe de préhension inférieur (4) étant solidaire de l'une des extrémités de la poutre principale (3) et orienté sensiblement perpendiculairement à cette dernière, l'organe de préhension supérieur (6) étant monté pivotant, au moyen d'une première articulation (7), à l'autre extrémité de la poutre principale (3) de manière à pouvoir pivoter entre une position perpendiculaire à la poutre principale et une position parallèle à celle-ci, la poutre principale (3) étant reliée, au moyen d'une seconde articulation (9), au bras de grue (1), un organe hydraulique (10) reliant le moyen d'abattage (2) au bras de grue (1) pour faire pivoter le moyen d'abattage (2) par rapport au bras de grue (1), caractérisé en ce que l'on peut faire pivoter l'organe de préhension supérieur (6) jusqu'à une position orientée parallèlement à la poutre principale et dans son prolongement, que la seconde articulation (9) reliant la poutre (3) au bras de grue (1) est disposée entre les organes de préhension supérieur et inférieur (4, 6) et que l'organe hydraulique (10) peut faire pivoter le moyen d'abattage (2), par rapport au bras de grue (1), d'un angle égal ou supérieur à 180°.

2. Dispositif selon la revendication 1, dans lequel la seconde articulation (9) est disposée sensiblement équidistante des organes de préhension supérieur et inférieur (4, 6) et à distance de la poutre principale.

3. Procédé d'abattage d'arbres au moyen du dispositif selon l'une des revendications 1 et 2 et d'introduction des arbres dans une machine à opérations multiples comportant une unité de traitement, procédé comprenant la préhension d'un tronc d'arbre par les organes de préhension supérieur et inférieur alors que la poutre principale (3) est maintenue parallèle audit tronc d'arbre, la coupe du tronc d'arbre au moyen de la scie ou de la cisaille de l'organe de préhension inférieur, le soulèvement du tronc d'arbre encore vertical, le renversement du tronc d'arbre en une position sensiblement horizontale par pivotement du moyen d'abattage (2), l'ouverture de l'organe de préhension inférieur (4), le pivotement poursuivi du moyen d'abattage (2) par rapport au bras de grue (1) avec pivotement simultané, dans le sens opposé, de l'organe de préhension supérieur (6) par rapport à la poutre principale de manière à déplacer le tronc d'arbre horizontalement, dans le sens de son extrémité de souche, pour l'introduire dans l'unité de traitement, et l'ouverture de l'organe de préhension supérieur (6) pour lâcher le tronc.

# FIG.1

# FIG.2

# FIG.3